# EUROPEAN PATENT APPLICATION

(11) **EP 4 011 836 A1**
(43) Date of publication of application: **15.06.2022**
(21) Application number: 20850136.1
(22) Date of filing: 06.08.2020
(51) Int. Cl.: C01G 53/00, H01M 4/505, H01M 4/525

(54) **NICKEL-COMPLEXED HYDROXIDE, AND POSITIVE ELECTRODE ACTIVE MATERIAL PRODUCED USING NICKEL-COMPLEXED HYDROXIDE AS PRECURSOR**

(30) Priority: 07.08.2019 JP 2019145619
(71) Applicant: Tanaka Chemical Corporation, Fukui-shi, Fukui 910-3131 (JP)
(72) Inventor: SATOMI, Naotoshi, Fukui-shi, Fukui 910-3131 (JP); IIDA, Yasutaka, Fukui-shi, Fukui 910-3131 (JP)
(74) Representative: Weickmann, Hans
(86) International application number: PCT/JP2020/030128
(87) International publication number: WO 2021/025098

(57) **Abstract**

Provided is a nickel composite hydroxide that was excellent in reactivity to a lithium compound and a positive electrode active material using the nickel composite hydroxide as a precursor. The nickel composite hydroxide, having an average diameter of pores of 50 Å or larger and 60 Å or smaller in pore distribution measurement by a nitrogen adsorption method and an integrated intensity ratio of a diffraction peak appearing in a range of 2θ = 51.9 ± 1.0°/a diffraction peak appearing in a range of 2θ = 19.1 ± 1.0° in powder X-ray diffraction using CuKα rays of 0.40 or more and 0.50 or less.

## Description

### Technical Field

The present invention relates to a nickel composite hydroxide and a positive electrode active material using the nickel composite hydroxide as a precursor, and particularly relates to a nickel composite hydroxide excellent in reactivity with a lithium compound when producing the positive electrode active material.

### Background Art

In recent years, from the viewpoint of reducing the environmental load, secondary batteries have been used in a wide range of fields such as mobile devices and vehicles that use electricity or combine it for use as a power source. Examples of the secondary batteries include a secondary battery using a non-aqueous electrolyte such as a lithium ion secondary battery. The secondary battery using a non-aqueous electrolyte such as the lithium ion secondary battery is suitable for miniaturization and weight reduction, and has characteristics such as a high utilization ratio and high cycle characteristics.

Meanwhile, in producing a positive electrode active material by calcining a nickel composite hydroxide that is a precursor, from the viewpoints of further improvement of various characteristics such as the high utilization ratio and high cycle characteristics, improvement of production efficiency, energy saving, etc., it has been required to obtain a positive electrode active material in a state of temperature upon calcination reduced as low as possible. In particular, the nickel composite hydroxide is not excellent in reactivity with a lithium compound, and when producing a lithium-nickel composite oxide that is used as a positive electrode active material for lithium ion secondary batteries by calcining a mixture of the nickel composite hydroxide and the lithium compound, a high calcination temperature is required to produce it.

Therefore, for reaction with a lithium compound in a state of reduced calcination temperature, Patent Literature 1 has proposed a nickel-cobalt-manganese-based composite oxide having an intensity of a XRD peak at 2θ = 18.3 ± 0.5° and an intensity of a XRD peak at 2θ = 37.1 ± 1.5° in a XRD pattern in XRD measurement using CuKα rays as a radiation source, which are equivalent to each other, or the peak intensity of 18.3° being not greater than the peak intensity of 37.1°. In Patent Literature 1, imparting a characteristic crystal structure having the aforementioned peak intensity to the nickel-cobalt-manganese-based composite oxide reduces the calcination temperature in reaction of the lithium compound with the nickel-cobalt-manganese-based composite oxide.

However, in a precursor of Patent Literature 1, a temperature in a range of 800°C to 1000°C is still required as the preferred calcination temperature when reacting with the lithium compound. Therefore, the precursor of Patent Literature 1 has reactivity to the lithium compound which is not significantly different from the conventional reactivity, and there is room for improvement in the reactivity with the lithium compound.

### Document List

### Patent Literature

Patent Literature 1: Japanese Patent Application Laid-Open No. 2014-139119

### Summary of Invention

### Technical Problem

In view of the above circumstances, an object of the present invention is to provide a nickel composite hydroxide excellent in reactivity to a lithium compound and a positive electrode active material using the nickel composite hydroxide as a precursor.

### Solution to Problem

The gist of configuration of the present invention is as follows:
[1] A nickel composite hydroxide, having an average diameter of pores of 50 Å or larger and 60 Å or smaller in pore distribution measurement by a nitrogen adsorption method and an integrated intensity ratio of a diffraction peak appearing in a range of 2θ = 51.9 ± 1.0°/a diffraction peak appearing in a range of 2θ = 19.1 ± 1.0° in powder X-ray diffraction using CuKα rays of 0.40 or more and 0.50 or less.
[2] The nickel composite hydroxide according to [1], wherein a molar ratio of Ni: Co : Mn : M, of the nickel composite hydroxide is represented by 1-x-y-z : x : y : z, where 0 < x ≤ 0.15, 0 < y ≤ 0.15, 0 ≤ z ≤ 0.05, and M represents one or more additive elements selected from the group consisting of Al, Fe, Ti and Zr.
[3] The nickel composite hydroxide according to [1] or [2], wherein a value of [a secondary particle diameter having a cumulative volume percentage of 90% by volume (D90) - a secondary particle diameter having a cumulative volume percentage of 10% by volume (D10)]/a secondary particle diameter having a cumulative volume percentage of 50% by volume (D50), is 0.80 or more and 1.50 or less.
[4] A positive electrode active material of a non-aqueous electrolyte secondary battery, wherein the nickel composite hydroxide according to any one of [1] to [3] is calcined with a lithium compound.

In an aspect of the aforementioned [1], the "average diameter of pores" refers to an average value of diameters of pores that were measured at 88 points by the nitrogen adsorption method in pore distribution measurement.

### Effects of Invention

According to an aspect of the nickel composite hydroxide of the present invention, the average diameter of pores being 50 Å or larger and 60 Å or smaller in pore distribution measurement by the nitrogen adsorption method and the integrated intensity ratio of the integrated intensity of the diffraction peak appearing in the range of 2θ = 51.9 ± 1.0°/ the integrated intensity of the diffraction peak appearing in the range of 2θ = 19.1 ± 1.0° in powder X-ray diffraction using CuKα rays being 0.40 or more and 0.50 or less, enables the nickel composite hydroxide to exhibit excellent reactivity to a lithium compound when producing the positive electrode active material using the nickel composite hydroxide as the precursor. Moreover, according to the aspect of the nickel composite hydroxide of the present invention, the nickel composite hydroxide can exhibit excellent reactivity to the lithium compound, which therefore can reduce a calcination temperature when producing the positive electrode active material from the nickel composite hydroxide.

According to an aspect of the nickel composite hydroxide of the present invention, a value of [a secondary particle diameter having a cumulative volume percentage of 90% by volume (D90) - a secondary particle diameter having a cumulative volume percentage of 10% by volume (D10)]/the secondary particle diameter having a cumulative volume percentage of 50% by volume (D50) being 0.80 or more and 1.50 or less, can uniformize various characteristics of the positive electrode active material regardless of a particle diameter of the nickel composite hydroxide, while improving the mounting density of the positive electrode active material.

### Brief Description of Drawings

[FIG. 1] Powder X-ray diffraction patterns of the nickel composite hydroxides of Examples 1 and 2 and Comparative Example 1.
[FIG. 2] Powder X-ray diffraction patterns of the nickel composite hydroxides of Examples 3 to 6.

### Description of Embodiments

Hereinafter, the nickel composite hydroxide that is the precursor of the positive electrode active material of a non-aqueous electrolyte secondary battery of the present invention will be described in detail below. The nickel composite hydroxide that is the precursor of the positive electrode active material of the non-aqueous electrolyte secondary battery of the present invention (hereinafter, may be simply referred to as the "nickel composite hydroxide of the present invention") comprises nickel (Ni), cobalt (Co), and manganese (Mn). Namely, the nickel composite hydroxide of the present invention comprises nickel (Ni), cobalt (Co) and manganese (Mn) as essential metal components.

The nickel composite hydroxide of the present invention is a secondary particle formed by aggregation of a plurality of primary particles. A particle shape of the nickel composite hydroxide of the present invention, which is a secondary particle is not particularly limited and has a wide variety of shapes, and examples thereof can include a substantially spherical shape and a substantially elliptical shape.

The nickel composite hydroxide of the present invention is configured to comprise a structure belonging to a trigonal space group P-3m1 in powder X-ray diffraction measurement using CuKα rays, and the range of 2θ = 19.1 ± 1.0° in powder X-ray diffraction measurement using CuKα rays, as a result of identifying it by selecting "Theophrastite, syn Ni(OH)₂", can be expressed as a (001) plane having an integrated intensity (area) of the diffraction peak that is defined as α, and the range of 2θ = 51.9 ± 1.0° in powder X-ray diffraction measurement using CuKα rays, as a result of identifying it by selecting "Theophrastite, syn Ni(OH)₂", can be expressed as a (012) plane, and when an integrated intensity (area) of the diffraction peak is defined as β, the value of β/α that is a ratio of the integrated intensity β to the integrated intensity α, is 0.40 or more and 0.50 or less.

The nickel composite hydroxide of the present invention having a value of β/α of 0.40 or more and 0.50 or less and an average diameter of pores of 50 Å or larger and 60 Å or smaller, as will be described later, can exhibit excellent reactivity to a lithium compound when producing the positive electrode active material using the nickel composite hydroxide as the precursor. Moreover, since it can exhibit excellent reactivity to the lithium compound, it is possible to reduce the calcination temperature when producing the positive electrode active material from the nickel composite hydroxide.

The value of β/α is not particularly limited as long as it is 0.40 or more and 0.50 or less, but a lower limit value thereof is preferably 0.41 and particularly preferably 0.42 from the viewpoint of further improving the reactivity to the lithium compound. An upper limit value of β/α is, on the other hand, preferably 0.49 from the viewpoint of definitely preventing a decrease in the reactivity to the lithium compound. The above upper limit values and lower limit values can be arbitrarily combined.

The average diameter of pores of the nickel composite hydroxide of the present invention is 50 Å or larger and 60 Å or smaller. The diameter of a pore is a diameter of the pore measured by pore distribution measurement by the nitrogen adsorption method. The average diameter of the pores is not particularly limited as long as it is 50 Å or larger and 60 Å or smaller, but a lower limit value thereof is preferably 51 Å from the viewpoint of further improving the reactivity to the lithium compound. An upper limit value of the average diameter of the pores is, on the other hand, preferably 58 Å and particularly preferably 56 Å, from the viewpoint of further improving the reactivity with the lithium compound. The above upper limit values and lower limit values can be arbitrarily combined.

The nickel composite hydroxide of the present invention having a composition represented by, for example, a molar ratio of Ni: Co : Mn : M being 1-x-y-z : x : y : z, where 0 < x ≤ 0.15, 0 < y ≤ 0.15, 0 ≤ z ≤ 0.05, and M represents one or more additive elements selected from the group consisting of Al, Fe, Ti and Zr, can be included.

Moreover, a particle diameter distribution width of the nickel composite hydroxide of the present invention is not particularly limited, but a lower limit value of [a secondary particle diameter having a cumulative volume percentage of 90% by volume (D90) - a secondary particle diameter having a cumulative volume percentage of 10% by volume (D10)]/a secondary particle diameter having a cumulative volume percentage of 50% by volume (D50) (hereinafter may be simply referred to as [(D90) - (D10)]/(D50)), is preferably 0.80, more preferably 0.90, and particularly preferably 1.00 from the viewpoint of improving a mounting density of the positive electrode active material on a positive electrode. An upper limit value of [(D90) - (D10)]/(D50), on the other hand, is preferably 1.50, more preferably 1.40 and particularly preferably 1.30, from the standpoint of uniformizing various properties of the positive electrode active material regardless of a size of a particle diameter of the nickel composite hydroxide. The above upper limit values and lower limit values can be arbitrarily combined. It is noted that D10, D50, and D90 refer to particle diameters measured by a particle size distribution measuring apparatus using a laser diffraction/scattering method.

A particle diameter of the nickel composite hydroxide of the present invention is not particularly limited, but for example, a lower limit value of D50 is preferably 5.5 µm and particularly preferably 6.0 µm, from the viewpoint of improving the mounting density of the positive electrode active material on the positive electrode. On the other hand, the upper limit value of D50 of the nickel composite hydroxide of the present invention is preferably 16.5 µm and particularly preferably 16.0 µm, from the viewpoint of improving the contactability with the electrolyte. The above upper limit values and lower limit values can be arbitrarily combined. Moreover, a lower limit value of D90 of the nickel composite hydroxide of the present invention, is preferably 15.0 µm and particularly preferably 17.0 µm, from the viewpoint of improving the mounting density of the positive electrode active material on the positive electrode. On the other hand, the upper limit value of D90 of the nickel composite hydroxide of the present invention is preferably 27.0 µm and particularly preferably 25.0 µm, from the viewpoint of improving the contactability with the non-aqueous electrolyte. The above upper limit values and lower limit values can be arbitrarily combined. Further, a lower limit value of D10 of the nickel composite hydroxide of the present invention is preferably 4.5 µm and particularly preferably 5.5 µm, from the viewpoint of improving the mounting density of the positive electrode active material on the positive electrode. On the other hand, the upper limit value of D10 of the nickel composite hydroxide of the present invention is preferably 8.5 µm and particularly preferably 7.5 µm, from the viewpoint of improving the contactability with the non-aqueous electrolyte. The above upper limit values and lower limit values can be arbitrarily combined.

A pore volume of the nickel composite hydroxide of the present invention is not particularly limited, but for example, a lower limit value thereof is preferably 0.030 cm³/g and particularly preferably 0.033 cm³/g from the viewpoint of contributing to further improvement of reactivity to the lithium compound. An upper limit value of the pore volume is, on the other hand, preferably 0.300 cm³/g and particularly preferably 0.270 cm³/g, from the viewpoint of imparting strength to the nickel composite hydroxide. The aforementioned pore volume is a value measured in pore distribution measurement by the nitrogen adsorption method. The above upper limit values and lower limit values can be arbitrarily combined.

A tap density (TD) of the nickel composite hydroxide of the present invention is not particularly limited, but for example, the lower limit value thereof is preferably 1.40 g/ml and particularly preferably 1.50 g/ml from the viewpoint of improving a filling degree of the positive electrode active material in the positive electrode. On the other hand, the upper limit value of the tap density of the nickel composite hydroxide of the present invention is preferably 2.40 g/ml and particularly preferably 2.30 g/ml, for example, from the viewpoint of improving the contactability between the positive electrode active material and the non-aqueous electrolyte. It is noted that the above upper limit values and lower limit values can be arbitrarily combined.

A bulk density (BD) of the nickel composite hydroxide of the present invention is not particularly limited, but for example, the lower limit value thereof is preferably 1.00 g/ml and particularly preferably 1.10 g/ml from the viewpoint of improving the filling degree of the positive electrode active material in the positive electrode. On the other hand, the upper limit value of the bulk density of the nickel composite hydroxide of the present invention is preferably 1.80 g/ml and particularly preferably 1.75 g/ml, for example, from the viewpoint of improving the contactability between the positive electrode active material and the non-aqueous electrolyte. The above upper limit values and lower limit values can be arbitrarily combined.

A BET specific surface area of the nickel composite hydroxide of the present invention is not particularly limited, but for example, the lower limit value thereof is preferably 5.0 m²/g and particularly preferably 6.0 m²/g from the viewpoint of improving the filling degree of the positive electrode active material in the positive electrode and a contact area with the non-aqueous electrolyte. On the other hand, the upper limit value of the BET specific surface area of the nickel composite hydroxide of the present invention is preferably 40 m²/g and particularly preferably 30 m²/g from the viewpoint of improving a crush strength of the positive electrode active material. It is noted that the above upper limit values and lower limit values can be arbitrarily combined.

Next, the method for producing the nickel composite hydroxide of the present invention will be described. First, a solution containing a nickel salt (for example, a sulfate), a cobalt salt (for example, a sulfate) and a manganese salt (for example, a sulfate), and optionally a complexing agent and a pH adjuster are appropriately added, and then the mixture is neutralized and crystallized in the reaction vessel by a coprecipitation method to prepare a nickel composite hydroxide, and to obtain a slurry suspension containing the nickel composite hydroxide. A solvent of the suspension that is, for example, water is used. Moreover, an aspect of the nickel composite hydroxide includes a particulate state thereof.

The complexing agent is not particularly limited as long as it can form a complex with a nickel ion, a cobalt ion, and a manganese ion in a solution such as an aqueous solution, and includes, for example, an ammonium ion donor. The ammonium ion donor includes, for example, ammonium sulfate, ammonium chloride, ammonium carbonate, and ammonium fluoride. In the neutralization reaction, an alkali metal hydroxide is appropriately added as the pH adjuster in order to adjust a pH value of the aqueous solution. Examples of the alkali metal hydroxide include sodium hydroxide and potassium hydroxide.

A metal salt solution containing the aforementioned nickel, cobalt, and manganese, the pH adjuster and optionally the ammonium ion donor are appropriately supplied to a reaction vessel in a continuous manner, and the substances in the reaction vessel are appropriately stirred to coprecipitate the metals in the metal salt solution (nickel, cobalt, manganese) by the neutralization reaction, and to crystallize the nickel composite hydroxide. In the neutralization reaction, a temperature of the reaction vessel is controlled in the range of, for example, 10°C to 90°C and preferably 20°C to 80°C. When the pH adjuster and the ammonium ion donor if necessary, are supplied to the reaction vessel for the neutralization reaction, an ammonia concentration of the mixed liquid in the reaction vessel is controlled to be 0.0 g/L or more and 3.5 g/L or less and preferably 1.0 g/L or more and 3.0 g/L or less, and by controlling a pH of the mixed liquid based on a liquid temperature of 40°C to be 10.0 or more and 11.5 or less and preferably 11.0 or more and 11.2 or less, a nickel composite hydroxide having an average diameter of pores of 50 Å or larger and 60 Å or smaller and a value of β/α of 0.40 or more and 0.50 or less can be produced.

The reaction vessel used for producing the nickel composite hydroxide of the present invention can include, for example, a continuous type that overflows the obtained nickel composite hydroxide to separate it, and a batch type that does not discharge it to an outside of the system until a reaction is completed.

As described above, by filtering the nickel composite hydroxide obtained in the crystallization step from the suspension and then washing it with an alkaline aqueous solution to remove impurities included in the nickel composite hydroxide, a purified nickel composite hydroxide (the nickel composite hydroxide of the present invention) can be obtained. Then, it is subjected to solid-liquid separation, the solid phase containing the nickel composite hydroxide is optionally washed with water, and the nickel composite hydroxide is heat-treated and dried to enable a powdery nickel composite hydroxide to be obtained.

Next, the positive electrode active material of a non-aqueous electrolyte secondary battery using the nickel composite hydroxide of the present invention as the precursor (hereinafter, may be simply referred to as the "positive electrode active material of the present invention") will be described. The positive electrode active material of the present invention is an aspect such that the nickel composite hydroxide of the present invention that is the precursor, has been calcined with, for example, a lithium compound. A crystal structure of the positive electrode active material of the present invention is a layered structure, and is more preferably a trigonal crystal structure, a hexagonal crystal structure, or a monoclinic crystal structure in order to obtain a secondary battery having a high discharge capacity. The positive electrode active material of the present invention can be used, for example, as a positive electrode active material of a non-aqueous electrolyte secondary battery such as a lithium ion secondary battery.

It is noted that when producing the positive electrode active material of the present invention, a step of preliminarily preparing the nickel composite hydroxide into the nickel composite oxide may be carried out, and the nickel composite oxide may be used as the precursor. The method for preparing the nickel composite oxide from the nickel composite hydroxide can include an oxidation treatment of calcining the nickel composite hydroxide at a temperature of 300°C or higher and 800°C or lower for 1 hour or longer and 10 hours or shorter in an atmosphere where an oxygen gas is present.

Next, the method for producing the positive electrode active material of the present invention will be described. For example, the method for producing the positive electrode active material of the present invention is a method for first adding a lithium compound to the nickel composite hydroxide or the nickel composite oxide, and mixing to prepare a mixture of the nickel composite hydroxide or the nickel composite oxide, and the lithium compound. The lithium compound is not particularly limited as long as it is a compound having lithium, and can include, for example, lithium carbonate and lithium hydroxide.

Next, the positive electrode active material can be produced by calcining the obtained mixture. The nickel composite hydroxide of the present invention has excellent reactivity to the lithium compound. In particular it has excellent reactivity to the lithium compound at a calcination temperature of 500°C or higher and 650°C or lower. Therefore, although the conventional calcination temperature is about 800°C or higher and 1000°C or lower, the nickel composite hydroxide of the present invention and the lithium compound sufficiently react with each other even at the calcination temperature of 500°C or higher and 650°C or lower, which enables the positive electrode active material to be produced.

The rate of temperature rise when calcining the obtained mixture is, for example, 50°C/h or more and 300°C/h or less, and a calcination time is, for example, 5 hours or longer and 20 hours or shorter. The calcination atmosphere is not particularly limited, and includes, for example, the atmosphere and oxygen. Moreover, a calcination furnace used for calcination is not particularly limited and includes, for example, a stationary box furnace and a roller Hearth continuous furnace.

Next, the positive electrode using the positive electrode active material of the present invention will be described. The positive electrode comprises a positive electrode current collector and a positive electrode active material layer formed on the surface of the positive electrode current collector by using the positive electrode active material of the present invention. The positive electrode active material layer has the positive electrode active material of the present invention, a binder, and optionally a conductive auxiliary agent. The conductive auxiliary agent is not particularly limited as long as it can be used for a non-aqueous electrolyte secondary battery, and for example, a carbon-based material can be used. The carbon-based material can include graphite powder, carbon black (for example, acetylene black), and a fibrous carbon material. The binder is not particularly limited, and can include, for example, polymer resins such as polyvinylidene difluoride (PVdF), butadiene rubber (BR), polyvinyl alcohol (PVA), carboxymethyl cellulose (CMC), and polytetrafluoroethylene (PTFE), and combinations thereof. The positive electrode current collector is not particularly limited, but for example, a beltshaped member made of a metal material such as Al, Ni, or stainless steel can be used. Among them, a member such that A1 is used as a forming material and processed into a thin belt-like film, is preferable in terms of facilitation of processing and a low price.

The method for producing the positive electrode is, for example, a method for first preparing a positive electrode active material slurry by mixing the positive electrode active material of the present invention, the conductive auxiliary agent, and the binder. Next, a surface of the positive electrode current collector is coated with the aforementioned positive electrode active material slurry by a known filling method, dried, then pressed and fixed to enable the positive electrode to be obtained.

The positive electrode thus obtained as described above by using the positive electrode active material, a negative electrode having a negative electrode current collector and a negative electrode active material layer containing a negative electrode active material, formed on the surface of the negative electrode current collector, an electrolytic solution containing a predetermined electrolyte, and a separator, are mounted by a known method to enable a non-aqueous electrolyte secondary battery to be assembled.

The electrolyte contained in the non-aqueous electrolyte includes LiClO₄, LiPF₆, LiAsF₆, LiSbF₆, LiBF₄, LiCF₃SO₃, LiN(SO₂CF₃)₂, LiN(SO₂C₂F₅)₂, LiN(SO₂CF₃)(COCF₃), Li(C₄F₉SO₃), LiC(SO₂CF₃)₃, Li₂B₁₀Cl₁₀, LiBOB where BOB refers to bis(oxalato)borate, LiFSI where FSI refers to bis(fluorosulfonyl) imide, lithium salts such as a lower aliphatic carboxylic acid lithium salt and LiAlCl₄. They may be used alone or in combination of two or more.

Moreover, dispersing media for the electrolyte include, for example, carbonates such as propylene carbonate, ethylene carbonate, dimethyl carbonate, diethyl carbonate, ethyl methyl carbonate, 4-trifluoromethyl-1,3-dioxolan-2-one, and 1,2-di(methoxycarbonyloxy) ethane; ethers such as 1,2-dimethoxyethane, 1,3-dimethoxypropane, pentafluoropropylmethyl ether, 2,2,3,3-tetrafluoropropyldifluoromethyl ether, tetrahydrofuran, and 2-methyltetrahydrofuran; esters such as methyl formate, methyl acetate, and γ-butyrolactone; nitriles such as acetonitrile and butyronitrile; amides such as N,N-dimethylformamide, and N,N-dimethylacetamide; carbamates such as 3-methyl-2-oxazolidone; sulfur-containing compounds such as sulfolane, dimethyl sulfoxide, and 1,3-propanesultone, or solvents such that a fluoro group is further introduced into these organic solvents (one or more of hydrogen atoms of the organic solvent are substituted with fluorine atoms), can be used. They may be used alone or in combination of two or more.

A solid electrolyte may be used instead of the electrolytic solution containing the above electrolyte. As the solid electrolyte, for example, an organic polymer electrolyte such as a polyethylene oxide-based polymer compound or a polymer compound containing at least one or more of a polyorganosiloxane chain or a polyoxyalkylene chain, can be used. Moreover, a so-called gel type compound in which a non-aqueous electrolytic solution is retained in a polymer compound, can also be used. Further, it includes inorganic solid electrolytes containing sulfides such as Li₂S-SiS₂, Li₂S-GeS₂, Li₂S-P₂S₅, Li₂S-B₂S₃, Li₂S-SiS₂-Li₃PO₄, Li₂S-SiS₂-Li₂SO₄, and Li₂S-GeS₂-P₂S₅. They may be used alone or in combination of two or more.

The separator includes, for example, members in forms such as a porous film, a non-woven fabric, and a woven fabric, having materials such as polyolefin resins such as polyethylene and polypropylene, a fluororesin, and a nitrogen-containing aromatic polymer.

### Examples

Next, examples of the nickel composite hydroxide of the present invention will be described, but the present invention is not limited to these examples as long as the present invention does not deviate from the gist of the present invention.

### Production of nickel composite hydroxides of Examples 1 to 6 and Comparative

### Example 1

### Production of nickel composite hydroxide of Example 1

An aqueous solution prepared by dissolving nickel sulfate, cobalt sulfate and manganese sulfate in a molar ratio of nickel: cobalt: manganese of a proportion of 83.0 : 12.0 : 5.0, an aqueous solution of ammonium sulfate (ammonium ion donor) and an aqueous solution of sodium hydroxide, were added dropwise to a reaction vessel having a predetermined volume, and continuously stirred by a stirrer equipped with a stirring blade while maintaining a pH of the mixed liquid in the reaction vessel at 11.15 based on the liquid temperature of 40°C and an ammonia concentration at 2.2 g/L. The inside of the reaction vessel had a nitrogen atmosphere. Moreover, the temperature of the mixed liquid in the reaction vessel was maintained at 70.0°C. The nickel composite hydroxide crystallized by the neutralization reaction was allowed to retain in the reaction vessel for 20 hours, then overflowed from an overflow pipe of the reaction vessel and taken out as a suspension. The suspension of the nickel composite hydroxide that was taken out was filtered, washed with an alkaline aqueous solution (8% by mass of an aqueous solution of sodium hydroxide), and subjected to solid-liquid separation. Then, the separated solid phase was washed with water, and further subjected to each treatment of dehydration and drying to obtain a purified powdery nickel composite hydroxide.

### Production of nickel composite hydroxide of Example 2

A nickel composite hydroxide was produced in the same manner as in Example 1 except that an aqueous solution in which the molar ratio of nickel: cobalt: manganese was changed to 88.5 : 9.0 : 2.5, was used and a pH of the mixed liquid in the reaction vessel was maintained at 11.08 based on the liquid temperature of 40°C.

### Production of nickel composite hydroxide of Example 3

A nickel composite hydroxide was produced in the same manner as in Example 1 except that an aqueous solution in which the molar ratio of nickel: cobalt: manganese was changed to 70.0 : 15.0 : 15.0, was used, a pH of the mixed liquid in the reaction vessel was maintained at 11.18 based on the liquid temperature of 40°C, and an ammonia concentration was maintained at 1.5 g/L.

### Production of nickel composite hydroxide of Example 4

A nickel composite hydroxide was produced in the same manner as in Example 1 except that an aqueous solution in which the molar ratio of nickel: cobalt: manganese was changed to 70.0 : 15.0 : 15.0, was used, a pH of the mixed liquid in the reaction vessel was maintained at 10.37 based on the liquid temperature of 40°C, and an ammonia concentration was maintained at 0.0 g/L (i.e., the ammonium ion donor was not added).

### Production of nickel composite hydroxide of Example 5

A nickel composite hydroxide was produced in the same manner as in Example 1 except that a pH of the mixed liquid in the reaction vessel was maintained at 10.24 based on the liquid temperature of 40°C, and an ammonia concentration was maintained at 0.0 g/L (i.e., the ammonium ion donor was not added).

### Production of nickel composite hydroxide of Example 6

A nickel composite hydroxide was produced in the same manner as in Example 2 except that a pH of the mixed liquid in the reaction vessel was maintained at 10.17 based on the liquid temperature of 40°C, and an ammonia concentration was maintained at 0.0 g/L (i.e., the ammonium ion donor was not added).

### Production of nickel composite hydroxide of Comparative Example 1

A nickel composite hydroxide was produced in the same manner as in Example 1 except that an aqueous solution in which the molar ratio of nickel : cobalt: manganese was changed to 88.5 : 9.0 : 2.5, was used, a pH of the mixed liquid in the reaction vessel was maintained at 11.69 based on the liquid temperature of 40°C, and an ammonia concentration was maintained at 3.8 g/L.

The evaluation items of the physical properties of the nickel composite hydroxides of Examples 1 to 6 and Comparative Example 1 are as follows.

### (1) Composition analysis of nickel composite hydroxide

Composition analysis was carried out by dissolving the obtained nickel composite hydroxide in hydrochloric acid and then using an inductively coupled plasma emission spectrometer (Optima 7300DV, manufactured by PerkinElmer Japan Co., Ltd.).

### (2) D10, D50, and D90

The values were measured with a particle size distribution measuring apparatus (MT3300 manufactured by Nikkiso Co., Ltd.) (the principle was a laser diffraction/scattering method). The measurement conditions were as follows: water was used as a solvent, 1 mL of sodium hexametaphosphate was charged as a dispersant, the transmittance after the sample was charged was set to be in the range of 85 ± 3%, and no ultrasonic waves were generated. Moreover, the solvent refractive index of 1.333 that was a refractive index of water, was used when analyzed. In the obtained cumulative particle diameter distribution curve, a value of the particle diameter at the point where a cumulative volume from the small particle side was 10% was D10 (µm), and a value of the particle diameter at the point where the cumulative volume was 50% was D50 (µm), and a value of the particle diameter at the point where the cumulative volume was 90% was D90 (µm), and a value of the particle diameter distribution width [(D90) - (D10)]/(D50) was calculated.

### (3) Average diameter of pores (Å) and pore volume (cm³/g)

The average diameter of the pores and pore volume were measured by pore distribution measurement at 88 points by the nitrogen adsorption method using a specific surface area/pore distribution measuring apparatus (TriStar^{®} manufactured by Shimadzu Corporation). The average diameter of the pores was taken as the average value of the pores measured in the pore distribution measurement at 88 points by the nitrogen adsorption method. Moreover, the Barrett-Joyner-Halenda method was used for values of the average diameter of the pores and pore volume.

### (4) Integrated intensity ratio of diffraction peaks of nickel composite hydroxide

In the nickel composite hydroxide, the integrated intensity of the diffraction peak that was configured to comprise the structure belonging to the trigonal space group P-3m1 in powder X-ray diffraction using CuKα rays and appeared in the range of 2θ = 19.1 ± 1.0°, and the integrated intensity of the diffraction peak that appeared in the range of 2θ = 51.9 ± 1.0° in powder X-ray diffraction measurement using CuKα rays, were measured, respectively. Specifically, the powder X-ray diffraction measurement was carried out by using an X-ray diffractometer (Ultima IV, manufactured by Rigaku Co., Ltd.). Nickel composite hydroxide powder was charged in a dedicated substrate, and the measurement was carried out by using a CuKα radiation source (40 kV/40 mA) under the conditions of a diffraction angle of 2θ = 5° to 80°, a sampling width of 0.03°, and a scan speed of 20°/min, to obtain a powder X-ray diffraction pattern. The obtained powder X-ray diffraction pattern was subjected to smoothing processing and background removal processing by using an integrated powder X-ray analysis software PDXL, and was resultingly identified by selecting "Theophrastite, syn Ni(OH)₂" to measure the integrated intensity α of the diffraction peak appearing in the range of 2θ = 19.1 ± 1.0° and the integrated intensity β of the diffraction peak appearing in the range of 2θ = 51.9 ± 1.0° from the powder X-ray diffraction patterns, and to calculate the integrated intensity ratio β/α.

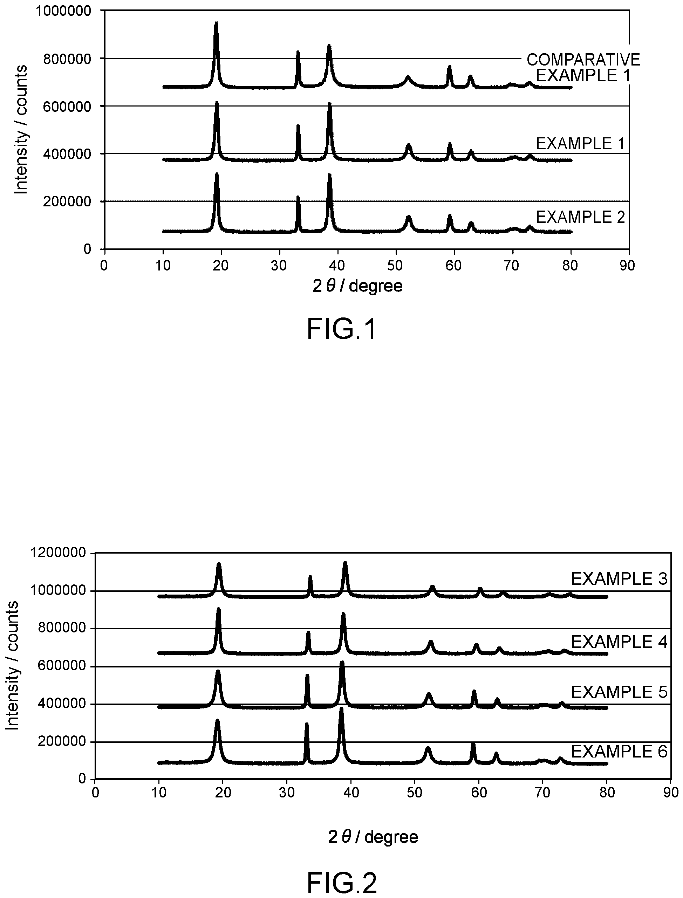

Table 1 below shows the evaluation results of the physical properties of the nickel composite hydroxides of Examples 1 to 6 and Comparative Example 1. Moreover, the powder X-ray diffraction patterns of the nickel composite hydroxides of Examples 1 and 2 and Comparative Example 1 are shown in FIG. 1. Further, the powder X-ray diffraction patterns of the nickel composite hydroxides of Examples 3 to 6 are shown in FIG. 2.

**[Table 1]**

| | Example 1 | Example 2 | Example 3 | Example 4 | Example 5 | Example 6 | Comparative Example 1 |
|---|---|---|---|---|---|---|---|
| **Composition analysis (molar ratio of nickel : cobalt: manganese)** | 83.0:12.0:5.0 | 88.5:9.0:2.5 | 70.0:15.0:15.0 | 70.0:15.0:15.0 | 83.0:12.0:5.0 | 88.5:9.0:2.5 | 88.5:9.0:2.5 |
| **[(D90)-(D10)]/(D50)** | 1,04 | 0,85 | 1,13 | 1,47 | 1,27 | 1,03 | 1,56 |
| **Average diameter of pores (A)** | 54,1 | 52,1 | 53,4 | 53,9 | 51,4 | 52,7 | 48,4 |
| **Pore volume (cm³/g)** | 0,035 | 0,034 | 0,039 | 0,202 | 0,258 | 0,252 | 0,026 |
| **Integrated intensity ratio of diffraction peaks (β/α)** | 0,49 | 0,46 | 0,44 | 0,42 | 0,43 | 0,42 | 0,30 |

### Production of positive electrode active material using nickel composite hydroxides of Examples 1 to 6 and Comparative Example 1 as precursors

Lithium hydroxide was mixed with each of the nickel composite hydroxides of Examples 1 to 6 and Comparative Example 1 so that a molar ratio of lithium/(nickel + cobalt + manganese) was 1.03, to prepare a mixture. The obtained mixture was calcined under the calcination conditions of each calcination temperature of 500°C, 600°C, or 650°C, a rate of temperature rise of 120°C/Hr, a calcination time of 15 Hr, an air flow rate of 4 L/min and a filling amount of 30 g in a sheath that is a sample storage container and has a size of 85 mm × 85 mm × 45 mm, to obtain a calcined product that is an oxide comprising Li, Ni, Co and Mn. An electric furnace (KBF894N1 manufactured by Koyo Thermo Systems Co., Ltd.) was used for calcination.

### (5) Height of diffraction peak of positive electrode active material

Each calcined product (the positive electrode active material) obtained by calcination of each of the nickel composite hydroxides of Examples 1 to 6 and Comparative Example 1 was subjected to measurement of a height of the diffraction peak appearing in the range of 2θ = 36.5 ± 1.0° of each calcined product at the calcination temperatures of 500°C, 600°C and 650°C by powder X-ray diffraction measurement using CuKα rays. The diffraction peak appearing in the range of 2θ = 36.5 ± 1.0° is one of the diffraction peaks peculiar to an oxide comprising Li, Ni, Co and Mn. It is noted that the powder X-ray diffraction measurement was carried out by using an X-ray diffractometer (Ultima IV, manufactured by Rigaku Co., Ltd.). The results of the heights of the diffraction peaks appearing in the range of 2θ = 36.5 ± 1.0° of each calcined product are shown in Table 2 below.

**[Table 2]**

| Calcination temperature | Example 1 | Example 2 | Example 3 | Example 4 | Example 5 | Example 6 | Comparative Example 1 |
|---|---|---|---|---|---|---|---|
| 500°C | 26000 | 19000 | 28000 | 25000 | 24000 | 16000 | 11000 |
| 600°C | 33000 | 23000 | 36000 | 33000 | 27000 | 17000 | 14000 |
| 650°C | 60000 | 61000 | 62000 | 61000 | 59000 | 62000 | 45000 |

Tables 1 and 2 showed that the calcined products obtained from the nickel composite hydroxides of Examples 1 to 6 each, having the average diameter of the pores of 50 Å or larger and 60 Å or smaller and the integrated intensity ratio β/α of the integrated intensity of the diffraction peak appearing in the range of 2θ = 51.9 ± 1.0°/the integrated intensity of the diffraction peak appearing in the range of 2θ = 19.1 ± 1.0° being 0.40 or more and 0.50 or less, had the larger height of the diffraction peak appearing in the range of 2θ = 36.5 ± 1.0° at any calcination temperature of 500°C, 600°C, and 650°C and was excellent in yield of the oxide comprising Li, Ni, Co and Mn. Therefore, it was found that the nickel composite hydroxides of Examples 1 to 6 each, having the average diameter of the pores of 50 Å or larger and 60 Å or smaller and the integrated intensity ratio β/α of the integrated intensity of the diffraction peak appearing in the range of 2θ = 51.9 ± 1.0°/the integrated intensity of the diffraction peak appearing in the range of 2θ = 19.1 ± 1.0° being 0.40 or more and 0.50 or less, had excellent reactivity to the lithium compounds. Moreover, it was found that since the nickel composite hydroxides of Examples 1 to 6 have excellent reactivity to the lithium compounds at the calcination temperatures of 500°C to 650°C, positive electrode active materials can be obtained at the calcination temperatures lower than the conventional calcination temperatures.

Further, it was found that the nickel composite hydroxides of Examples 1 to 6 were excellent in the yields of oxides comprising Li, Ni, Co and Mn and had excellent reactivity to lithium compounds at any molar ratio of nickel of 70.0% to 88.5%. In particular the nickel composite hydroxides of Examples 1, 3 and 4 each in which the average diameter of the pores was 53.4 Å or larger and 54.1 Å or smaller was found to have the larger height of the diffraction peak appearing in the range of 2θ = 36.5 ± 1.0° at any calcination temperature of 500°C, 600°C, and 650°C and had superior reactivity to the lithium compound.

Further, it was found that the nickel composite hydroxides of Examples 1 to 6 each had the particle diameter distribution width [(D90) - (D10)]/(D50) being in the range of 1.03 to 1.47 enabled the various properties of the positive electrode active material to be uniformized regardless of a size of a particle diameter of the nickel composite hydroxide while improving the mounting density of the positive electrode active material on the positive electrode. Further, the nickel composite hydroxides of Examples 1 to 6 increased the pore volumes from 0.034 cm³/g to 0.258 cm³/g.

On the other hand, the nickel composite hydroxide of Comparative Example 1 having the average diameter of the pores of 48.4 Å and the integrated intensity ratio β/α of the integrated intensity of the diffraction peak appearing in the range of 2θ = 51.9 ± 1.0°/the integrated intensity of the diffraction peak appearing in the range of 2θ = 19.1 ± 1.0° being 0.30, had the smaller height of the diffraction peak appearing in the range of 2θ = 36.5 ± 1.0° at any of the calcination temperatures of 500°C, 600°C, and 650°C, and could not exhibit excellent reactivity to the lithium compound. The nickel composite hydroxide of Comparative Example 1 exhibited the [(D90) - (D10)]/(D50) value of 1.56 that was the large particle diameter distribution width, and the pore volume being merely 0.026 cm³/g.

### Industrial Applicability

Since the nickel composite hydroxide of the present invention has excellent reactivity to the lithium compound when producing the positive electrode active material, it can be used in a wide range of fields such as secondary batteries for mobile devices and vehicles, etc.

## Claims

1. A nickel composite hydroxide, having an average diameter of pores of 50 Å or larger and 60 Å or smaller in pore distribution measurement by a nitrogen adsorption method and an integrated intensity ratio of a diffraction peak appearing in a range of 2θ = 51.9 ± 1.0°/a diffraction peak appearing in a range of 2θ = 19.1 ± 1.0° in powder X-ray diffraction using CuKα rays of 0.40 or more and 0.50 or less.

2. The nickel composite hydroxide according to claim 1, wherein a molar ratio of Ni : Co : Mn : M, of the nickel composite hydroxide is represented by 1-x-y-z : x : y : z, where 0 < x ≤ 0.15, 0 < y ≤ 0.15, 0 ≤ z ≤ 0.05, and M represents one or more additive elements selected from the group consisting of Al, Fe, Ti and Zr.

3. The nickel composite hydroxide according to claim 1 or 2, wherein a value of [a secondary particle diameter having a cumulative volume percentage of 90% by volume (D90) - a secondary particle diameter having a cumulative volume percentage of 10% by volume (D10)]/a secondary particle diameter having a cumulative volume percentage of 50% by volume (D50), is 0.80 or more and 1.50 or less.

4. A positive electrode active material of a non-aqueous electrolyte secondary battery, wherein the nickel composite hydroxide according to any one of claims 1 to 3 is calcined with a lithium compound.
